# EUROPÄISCHE PATENTSCHRIFT

(11) **EP 3 648 889 B1**
(45) Veröffentlichungstag und Bekanntmachung des Hinweises auf die Patenterteilung: **19.03.2025**
(21) Anmeldenummer: 18737213.1
(22) Anmeldetag: 29.06.2018
(51) Int. Cl.: B03B 9/04, B02C 17/16, B02C 19/00, C04B 28/00

(54) **VERFAHREN ZUR AUFARBEITUNG VON FLUGASCHE SOWIE ANLAGE UND VERFAHREN ZUR HERSTELLUNG VON ZEMENT**
METHOD FOR RE-PROCESSING FLY ASH AND PLANT AND METHOD FOR PRODUCING CEMENT
PROCÉDÉ DE TRAITEMENT DE CENDRES VOLANTES ET INSTALLATION ET PROCÉDÉ DE PRODUCTION DE CIMENT

(30) Priorität: 04.07.2017 DE 102017114831
(43) Veröffentlichungstag der Anmeldung: 13.05.2020
(73) Patentinhaber: thyssenkrupp Polysius GmbH, 59269 Beckum (DE); thyssenkrupp AG, 45143 Essen (DE)
(72) Erfinder: KACHE, Guido, 59269 Beckum (DE); WILCZEK, Michael, 48231 Warendorf (DE); ASSMANN, Björn-Olaf, 59063 Hamm (DE)
(74) Vertreter: thyssenkrupp Intellectual Property GmbH
(86) Internationale Anmeldenummer: PCT/EP2018/067597
(87) Internationale Veröffentlichungsnummer: WO 2019/007838

(56) Entgegenhaltungen:
- JP-A- 2005 246 204
- DATABASE INSPEC [online] THE INSTITUTION OF ELECTRICAL ENGINEERS, STEVENAGE, GB; May 1968 (1968-05-01), BAGROV V G ET AL: "Motion of electron in electromagnetic fields of special types", Database accession no. 246
- ZHURNAL VYCHISLITEL'NOI MATEMATIKI I MATEMATICHESKOI FIZIKI USSR, vol. 8, no. 3, 20 December 2018 (2018-12-20), pages 691 - 695, ISSN: 0044-4669

## Beschreibung

Die Erfindung betrifft ein Verfahren zur Aufarbeitung von Flugasche.

Flugasche fällt in Brennanlagen, wie beispielsweise in einer Müllverbrennungsanlage, in großen Mengen an. So betrog die geschätzte Flugaschenproduktion alleine in Indien im Jahr 2010/11 etwa 190 Mio. t. Es wird erwartet, dass diese Menge sich in den nächsten zehn Jahren mehr als verdoppelt. Um den Entsorgungsproblemen der Flugasche zu begegnen, werden daher große Anstrengungen unternommen, um Möglichkeiten zur Verwendung der Flugasche zu finden. So ist es bereits gängige Praxis, dass Flugasche in Zement eingebunden wird. Für die Betreiber indischer Zementwerke besteht sogar eine gesetzliche Pflicht, die vom Markt bereitgestellte Flugasche abzunehmen und in den Produktionsprozess einzubinden.

Flugaschen weisen jedoch stark schwankende Dichten auf, was zu Problemen im Prozessverhalten führen kann. So können die glasig erstarten, kugelförmig ausgebildeten, feinen Flugaschepartikel als Vollkugeln, Hohlkugeln (Cenosphären) und partikelgefüllte Hohlkugeln (Plerosphären) auftreten und von Flugasche zu Flugasche variieren. Den Zementwerksbetreiber müssen in der Regel Flugaschen unterschiedlicher Kohlekraftwerke verarbeiten und sind dementsprechend auch mit stark schwankenden Qualitäten konfrontiert. Darüber hinaus ist es für die Zementwerksbetreiber selten absehbar, wann ihnen welche Flugasche vom Markt bereitgestellt wird.

Aus der JP 2005 246204 ist eine Methode zur Pulverisierung bekannt.

Der Erfindung liegt daher die Aufgabe zugrunde, ein Verfahren zur Aufarbeitung von Flugasche anzugeben, wodurch sich die Flugasche leichter in den Zementproduktionsprozess einbinden lässt.

Erfindungsgemäß wird diese Aufgabe durch die Merkmale des Anspruchs 1 gelöst.

Das erfindungsgemäße Verfahren zur Aufarbeitung von Flugasche zeichnet sich durch eine Mahlung der Flugasche in einer trockenbetriebenen Rührwerkskugelmühle aus.

Eine Anlage zur Herstellung von Zement zur Anwendung des erfindungsgemäßen Verfahrens weist insbesondere wenigstens eine aus einer ersten Mühle und einem ersten Sichter bestehende erste Mahlstufe zur Mahlung von Zementklinker auf und sieht weiterhin eine trockenbetriebene Rührwerkskugelmühle zur Mahlung von Flugasche sowie wenigstens eine Abzugseinrichtung zum gemeinsamen Abführen und/oder zur gemeinsamen Lagerung des gemahlenen Zementklinkers und der gemahlenen Flugasche vor.

Die mechanische Aktivierung von Flugasche durch Mahlung führt zu einer Asche mit einer deutlichen Verbesserung in der Kalkreaktivität, der Feinheit, dem Glasgehalt und weiteren Eigenschaften. Die mit derart aktivierter Asche hergestellten Portlandpuzzolan-Zemente können daher in ihren Eigenschaften die Spezifikationen der Zementnormen einhalten. Der Artikel von S. K. Chaturvedi, D. Yadav, V. P. Chatterjee, A. Pahuja, National Council for Cement and Building Materials, Ballabgarh, India, "Aktivierung von Flugasche zur Verbesserung der Gebrauchseigenschaften für die Zementherstellung", Cement International 5/2015, Vol. 13, Seiten 62 bis 67, beschreibt die durchgeführten Versuche zur Aktvierung von Flugasche mit Hilfe einer Kugelmühle. Herkömmliche Kugelmühlen benötigen jedoch für die Mahlung von Flugasche einen erheblichen Energiebedarf, der sogar höher ist, als der für die Mahlung des Zementklinkers. Eine ausreichende Aktivierung der Flugasche, um Probleme im Prozessverhalten zu vermeiden, war daher bisher nicht auf wirtschaftlich sinnvolle Art und Weise möglich.

Der erfindungsgemäße Einsatz einer Rührwerkskugelmühle zur Aktivierung der Flugasche führte zu einer deutlichen Senkung der zur Aktivierung erforderlichen Energie, sodass nun die Aktivierung der Flugasche wirtschaftlich durchführbar ist und sich damit die Flugasche auch in einer Qualität so aufbereiten lässt, dass Probleme im Prozessverhalten durch die Einbindung der Flugasche weitgehend vermieden werden. Rührwerkskugelmühlen haben im Gegensatz zu Kugelmühlen ein feststehendes Gehäuse. Die Aktivierung der Flugasche erfolgt auch bei der Rührwerkskugelmühle durch Einwirkung der im Inneren der Mühle befindlichen Kugeln auf die Flugasche. Während die Kugeln einer herkömmlichen Kugelmühle im Wesentlichen nur durch die Erdanziehung beschleunigt werden, erhalten die Kugeln in einer Rührwerkskugelmühle durch das rotierende Rührwerk einen zusätzlichen Impuls, der in einem höheren Krafteintrag resultiert.

Eine weitere Energieeinsparnis bei der Aktivierung der Flugasche wird auch dadurch erreicht, dass die Rührwerkskugelmühle trocken betrieben wird, da dadurch eine nachträgliche Trocknung des Materials entbehrlich ist. Flugaschen liegen schon als Ausgangsmaterial in relativ feiner Größe (< 500 µm) vor. Zur Erhöhung der Effizienz kann daher die Rührwerkskugelmühle mit entsprechend kleinen Mahlkörpern (beispielsweise im Bereich von 2 mm bis 15 mm, vorzugsweise 4 mm bis 6 mm ausgestattet werden. Außerdem bauen Rührwerkskugelmühlen im Vergleich zu herkömmlichen Kugelmühlen wesentlich kompakter, da ein Großteil der Mahlenergie durch das Rührwerk eingebracht wird.

Gemäß einer bevorzugten Ausgestaltung wird wenigstens 95% der Flugasche in der Rührwerkskugelmühle auf eine Endfeinheit von wenigstens 45 µm gemahlen. Des Weiteren ist es zweckmäßig, wenn die Flugasche in einem Durchgang durch die Rührwerkskugelmühle auf die gewünschte Endfeinheit gemahlen wird. Auf diese Weise wird der apparative Aufwand durch Vermeidung eines Sichters und zugehöriger Fördereinrichtungen entsprechend reduziert. Zur problemlosen Einbindung der Flugasche in dem herzustellenden Zement weist die Flugasche beispielsweise einen Gehalt an reaktionsfähigem Siliciumdioxid von wenigstens 25 Gew.-% auf. Erfindungsgemäß weist die Flugasche in dem herzustellenden Zement weist die Flugasche einen Gehalt an reaktionsfähigem Calciumoxid unter 15 Gew.-% auf.

Gemäß einer bevorzugten Betriebsweise wird die Rührwerkskugelmühle so betrieben, dass die Flugasche auf eine Feinheit mit einer spezifischen Oberfläche nach Blaine von wenigstens 5.000 cm²/g gemahlen wird.

Die Anlage zur Herstellung von Zement kann ferner eine zweite Mahlstufe aufweisen, die wenigstens eine zweite Mühle umfasst, die mit einem zweiten Sichter oder mit dem ersten Sichter zusammenwirkt. Die Rührwerkskugelmühle sieht eine Eingabeöffnung zur Zuführung der Flugasche und eine Auslassöffnung zum Abführen der Flugasche vor, wobei die Auslassöffnung vorzugsweise mit der Abzugseinrichtung in Verbindung steht. Dabei kann weiterhin zwischen der Auslassöffnung der Rührwerkskugelmühle und der Abzugseinrichtung ein Materialteiler mit einem Eingang, einem ersten Ausgang und einem zweiten Ausgang vorgesehen werden, wobei die Auslassöffnung der Rührwerkskugelmühle mit dem Eingang des Materialteilers, der erste Ausgang mit der Abzugseinrichtung und der zweite Ausgang mit der zweiten Mühle der zweiten Mahlstufe in Verbindung stehen. Auf diese Weise kann wahlweise ein Teil oder die gesamte aufbereitete Flugasche zusammen mit dem Zementklinker in der zweiten Mahlstufe gemeinsam gemahlen und dadurch innig vermischt werden.

Die Erfindung betrifft weiterhin ein Verfahren zur Mahlung von Zement, wobei Zementklinker und wenigstens ein weiterer Zusatzstoff (wie Gips, Hüttensand, etc.) in wenigstens einer ersten Mahlstufe gemahlen werden und Flugasche in einer trockenbetriebenen Rührwerkskugelmühle gemahlen wird, wobei der gemahlene Zementklinker mit dem wenigstens einen weiteren Zusatzstoff und die gemahlene Flugasche miteinander vermischt werden.

In der Zeichnung zeigen
- Fig. 1: eine schematische Darstellung einer erfindungsgemäßen Anlage zur Herstellung von Zement mit einer trockenbetriebenen Rührwerkskugelmühle zur Mahlung von Flugasche gemäß einem ersten Ausführungsbeispiel,
- Fig. 2: eine schematische Darstellung einer erfindungsgemäßen Anlage zur Herstellung von Zement mit einer trockenbetriebenen Rührwerkskugelmühle zur Mahlung von Flugasche gemäß einem zweiten Ausführungsbeispiel und
- Fig. 3: eine schematische Darstellung der trockenbetriebenen Rührwerkskugelmühle zur Mahlung der Flugasche.

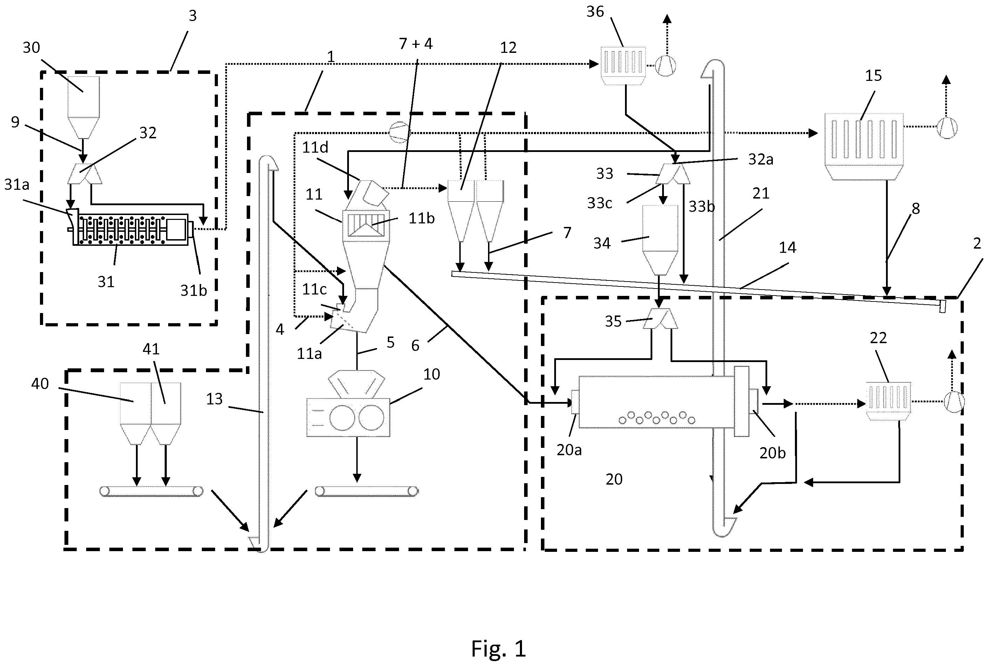

Die in Fig. 1 schematisch dargestellte Anlage zur Herstellung von Zement besteht im Wesentlichen aus einer ersten Mahlstufe 1, einer zweiten Mahlstufe 2 zur Mahlung von Zementklinker und einer trockenbetriebenen Rührwerkskugelmühle 3 zur Mahlung von Flugasche.

Die erste Mahlstufe 1 sieht eine erste, hier als Gutbettwalzenmühle ausgebildete Mühle 10, einen ersten Sichter 11 und einen Zyklonabscheider 12 vor. Der erste Sichter 11 ist als statisch-dynamischer Sichter ausgebildet und sieht einen statischen Sichter 11a und einen dynamischen Sichter 11b vor. Das zu sichtende Gut wird über einen Einlass 11c zunächst dem statischen Sichter 11a aufgegeben, der beispielsweise einen schräg oder treppenartig angeordneten Belüftungsboden aufweist, der mit Sichtluft 4 quer durchströmt wird. Das Grobgut 5 des statischen Sichters 11a gelangt in die erste Mühle 10, wird dort zerkleinert und mittels einer, beispielsweise als Becherwerk ausgebildeten Fördereinrichtung 13 zum Einlass 11c des statischen Sichters 11a zurückgeführt.

Das Feingut des statischen Sichters 11a gelangt zusammen mit der Sichtluft 4 in den dynamischen Sichters 11b, der üblicherweise mit einem Sichtrotor betrieben wird. Die Grieße 6 des dynamischen Sichters 11b gelangen in eine, beispielsweise als Kugelmühle ausgebildete zweite Mühle 20 der zweiten Mahlstufe 2. Das Feingut des dynamischen Sichters 11b wird zusammen mit der Sichtluft 4 ausgetragen und dem Zyklonabscheider 12 zugeführt. Dort wird das Feingut 7 als fertiggemahlener Zementklinker über eine Abzugseinrichtung 14 abgeführt. Die abgeschiedene Sichtluft 4 wird zum Teil wieder zum statischen Sichter 11a rezirkuliert oder alternativ in einem Staubfilter 15 vom Reststaub 8 befreit, der dann zusammen mit dem gemahlenen Feingut 7 über die Abzugseinrichtung 14 abgeführt wird. Das in der ersten Mahlstufe 1 zu mahlende Material setzt sich zum einen aus Zementklinker 40 und wenigstens einem weiteren Zusatzstoff 41, wie beispielsweise Hüttensand oder Gips zusammen.

Im dargestellten Ausführungsbeispiel wird das zu zerkleinernde Material zunächst über die erste Fördereinrichtung 13 dem statischen Sichter 11a zugeführt. Es wäre aber auch denkbar, dass das Material direkt der ersten Mühle 10 aufgegeben wird.

Die Grieße 6 werden in der zweiten Mühle 20 weiter zerkleinert und gelangen über eine zweite Fördereinrichtung 21 über einen zweiten Einlass 11d des ersten Sichters 11 in den dynamischen Sichter 11b. Alternativ könnte das in der zweiten Mühle gemahlene Gut auch zum ersten Einlass 11c des ersten Sichters rezirkuliert werden. Außerdem könnte die zweite Mühle 20 mit einem separaten Sichter zusammenwirken.

Die Einrichtung zur Aufbereitung von Flugasche 9 weist wenigstens einen Sammelbehälter 30 für die zu zerkleinernde Flugasche 9 und eine Rührwerkskugelmühle 31 auf. Die Rührwerkskugelmühle 31 sieht eine Eingabeöffnung 31a auf, die mit dem Sammelbehälter 30 in Verbindung steht. Weiterhin ist eine Auslassöffnung 31b vorgesehen, die mit der Abzugseinrichtung 14 zum gemeinsamen Abführen des gemahlenen Zementklinkers (Feingut 7) und der gemahlenen Flugasche 9 verbunden ist. Zwischen dem Sammelbehälter 30 und der Eingabeöffnung 31a der Rührwerkskugelmühle kann ferner ein erster Materialteiler 32 zur Umgehung der Rührwerkskugelmühle vorgesehen werden. Auf diese Weise ist es möglich, dass ein Teil oder auch die gesamte Flugasche ohne weitere Zerkleinerung mit dem gemahlenen Zementklinker vermischt wird. Dies wird man insbesondere dann vorsehen, wenn die Flugasche bereits in ausreichender Qualität und Feinheit vorliegt.

Ansonsten kann der erste Materialteiler 32 auch so eingestellt werden, dass ein Teil der Flugasche gemahlen wird, während ein anderer Teil ohne weitere Aktivierung mit dem gemahlenen Zementklinker 7 vermischt wird. Zwischen der Auslassöffnung 31b und der Abzugseinrichtung 14 ist ein Materialabscheider in Form eines Filters 36 und ein zweiter Materialteiler 33 angeordnet. Die im Filter 36 abgeschiedene Flugasche wird dem Eingang 33a des zweiten Materialteilers 33 zugeführt, während die im Filter 36 abgeschiedene Förderluft als Abluft abgeführt wird. Der zweite Materialteiler weist ferner einen ersten Ausgang 33b auf, der mit der Abzugseinrichtung 14 in Verbindung steht. Der zweite Ausgang 33c ist über einen Zwischenbehälter 34 mit einem Einlass 20a der zweiten Mühle 20 verbunden.

Weiterhin ist zwischen dem Zwischenbehälter 34 und der zweiten Mühle 20 ein dritter Materialteiler 35 vorgesehen, mit dem die Flugasche aus dem Zwischenbehälter 34 unter Umgehung der zweiten Mühle 20 zunächst dem ersten Sichter 11 aufgegeben wird. Dies hat den Vorteil, dass eine bereits ausreichend fein aufbereitete Flugasche nicht unnötigerweise nochmals in der zweiten Mühle 20 zerkleinert werden muss. Das in der zweiten Mühle 20 zerkleinerte Material wird über den Auslass 20b ausgetragen und gelangt über die zweite Fördereinrichtung 21 in den ersten Sichter 11, alternativ in einen separaten Sichter. Wird die zweite Mühle 20 mit einem Luftstrom betrieben, findet zunächst die Trennung zwischen Luft und Material in einem weiteren Staubabscheider 22 statt, wobei das abgeschiedene Material über die zweite Fördereinrichtung 21 in den ersten Sichter 11 gelangt.

Im dargestellten Ausführungsbeispiel wird der gemahlene Zementklinker (Feingut 7 des ersten Sichters 11) bereits auf der Abzugseinrichtung 14 mit der Flugasche 9 vermischt. Beide Bestandteile werden auch gemeinsam in einen nicht näher dargestellten Sammelbehälter gefördert. Im Rahmen der Erfindung ist es aber auch denkbar, dass der gemahlene Zementklinker 7 und die Flugasche 9 über separate Fördereinrichtungen zu einer gemeinsamen Lagerung transportiert werden.

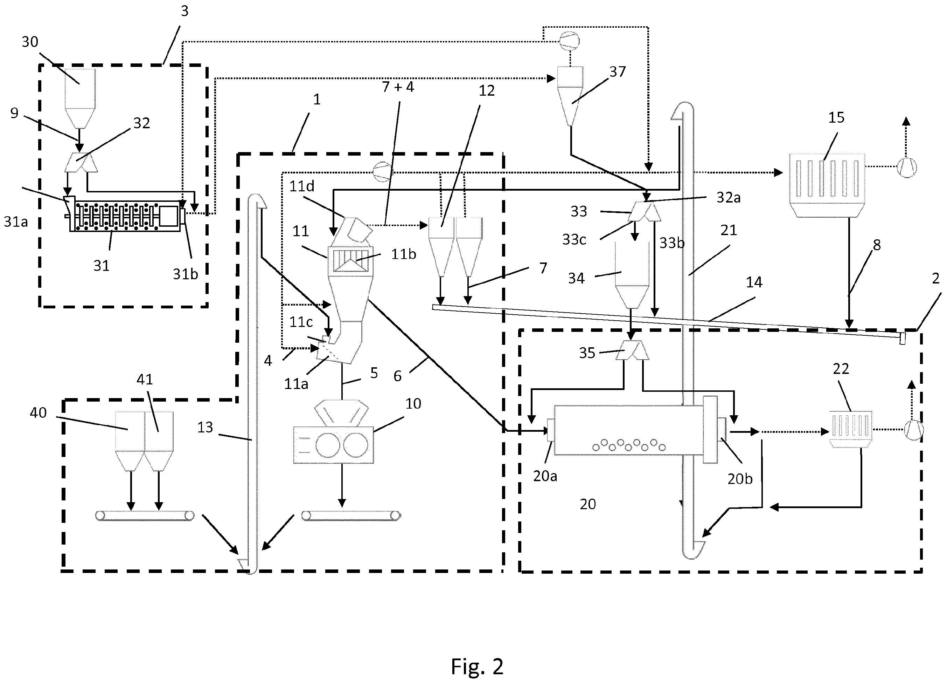

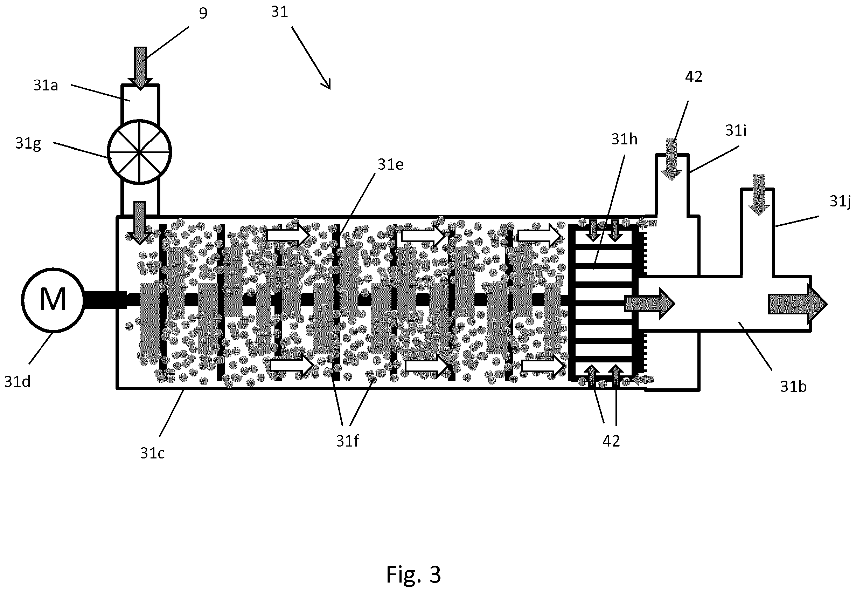

Fig. 2 zeigt ein zweites Ausführungsbeispiel einer Anlage zur Herstellung von Zement mit einer trockenbetriebenen Rührwerkskugelmühle zur Mahlung von Flugasche. Der Unterschied zum ersten Ausführungsbeispiel besteht darin, dass der Filter 36 der Fig. 1 in Fig.2 durch einen Zyklon 37 ersetzt worden ist. Die im Zyklon 37 abgetrennte Flugasche gelangt wiederum in den Materialteiler 33, während die abgetrennte Luft als Umluft zur Rührwerkskugelmühle 31 zurückgeführt wird und dort wenigstens zum Teil als Förderluft 42 (Fig. 3) verwendet wird.

Fig. 3 zeigt eine vergrößerte Darstellung der Rührwerkskugelmühle 31 gemäß den Figuren 1 und 2. Im Gegensatz zu einer herkömmlichen Kugelmühle weist die Rührwerkskugelmühle 31 ein feststehendes Gehäuse 31c und ein im Inneren des Gehäuses über einen Motor 31d angetriebenes Rührwerk 31e auf. Des Weiteren wird die Rührwerkskugelmühle mit Mahlkörpern 31f, insbesondere Mahlkugeln, betrieben.

Die zu zerkleinernde Flugasche 9 wird im Bereich der Eingabeöffnung 31a über eine Zellenradschleuse 31g dosiert zugeführt. Die Aktivierung bzw. Aufbereitung der Flugasche erfolgt im Wesentlichen durch den Kontakt mit den Mahlkörpern 31f, die durch das Rührwerk 31e angehoben und beschleunigt werden. Im Bereich der Auslassöffnung 31b ist ein mit dem Rührwerk mitrotierender Austragsrotor 31h vorgesehen, der die aufbereitete Flugasche von den Mahlkörpern 31f trennt. Über eine im Bereich der Auslassöffnung 31b vorgesehenen Förderluftöffnung 31i wird Förderluft 42 zum Austragen der aufbereiteten Flugasche zugeführt. Diese Förderluft 42 strömt in den Austragsrotor 31h und trägt die aufbereitete Flugasche über die Auslassöffnung 31b aus. Zur Unterstützung der Förderwirkung kann im Bereich der Auslassöffnung 31b auch noch wenigstens eine weitere Förderluftöffnung 31j vorgesehen werden.

## Patentansprüche

1. Verfahren zur Aufarbeitung von Flugasche (9) durch Mahlung von Flugasche (9), wobei die Flugasche (9) in einer trockenbetriebenen Rührwerkskugelmühle (31) gemahlen wird **dadurch gekennzeichnet, dass** die Flugasche (9) einen Gehalt an reaktionsfähigem Calciumoxid unter 15 Gew.-% aufweist.

2. Verfahren nach Anspruch 1, **dadurch gekennzeichnet, dass** wenigstens 95% der Flugasche (9) auf eine Endfeinheit von wenigstens 45 µm gemahlen wird.

3. Verfahren nach Anspruch 1, **dadurch gekennzeichnet, dass** die Flugasche (9) in einem Durchgang durch die Rührwerkskugelmühle (31) auf eine gewünschte Endfeinheit gemahlen wird.

4. Verfahren nach Anspruch 1, **dadurch gekennzeichnet, dass** die Flugasche (9) auf eine Feinheit mit einer spezifischen Oberfläche nach Blaine von wenigstens 5.000 cm²/g gemahlen wird.

## Claims

1. A process for processing fly ash (9) by grinding fly ash (9), wherein the fly ash (9) is ground in a dry-operated agitator bead mill (31), **characterised in that** the fly ash (9) has a content of reactive calcium oxide of less than 15% by weight.

2. Process according to claim 1, **characterised in that** at least 95% of the fly ash (9) is ground to a final fineness of at least 45 µm.

3. Method according to claim 1, **characterised in that** the fly ash (9) is ground to a desired final fineness in one pass through the agitator bead mill (31).

4. Process according to claim 1, **characterised in that** the fly ash (9) is ground to a fineness with a specific surface area according to Blaine of at least 5,000 cm²/g.

## Revendications

1. Procédé de traitement des cendres volantes (9) par broyage des cendres volantes (9), dans lequel les cendres volantes (9) sont broyées dans un broyeur à billes à agitateur fonctionnant à sec (31), **caractérisé par le fait que** les cendres volantes (9) ont une teneur en oxyde de calcium réactif inférieure à 15 % en poids.

2. Procédé selon la revendication 1, **caractérisé par le fait qu'**au moins 95 % des cendres volantes (9) sont broyées à une finesse finale d'au moins 45 µm.

3. Procédé selon la revendication 1, **caractérisé par le fait que** les cendres volantes (9) sont broyées à une finesse finale souhaitée en un seul passage dans le broyeur à billes à agitateur (31).

4. Procédé selon la revendication 1, **caractérisé par le fait que** les cendres volantes (9) sont broyées à une finesse avec une surface spécifique selon Blaine d'au moins 5 000 cm²/g.
